# EUROPÄISCHE PATENTSCHRIFT

(11) **EP 2 524 796 B1**
(45) Veröffentlichungstag und Bekanntmachung des Hinweises auf die Patenterteilung: **17.08.2016**
(21) Anmeldenummer: 12153569.4
(22) Anmeldetag: 02.02.2012
(51) Int. Cl.: B29C 70/46, B29C 70/48, B29C 70/54, B29C 33/00

(54) **Verfahren und Anlage zur Herstellung eines im Wesentlichen schalenförmigen Kunststoffteils**
Method and installation for producing shell like plastic parts
Procédé et installation pour la fabrication d'un élément en matière synthétique essentiellement en forme de coque

(30) Priorität: 18.05.2011 DE 102011101954
(43) Veröffentlichungstag der Anmeldung: 21.11.2012
(73) Patentinhaber: MBB Fertigungstechnik GmbH, 48361 Beelen (DE)
(72) Erfinder: Bühlmeyer, Robert, 33442 Herzebrock-Clarholz (DE)
(74) Vertreter: Bittner, Thomas L.

(56) Entgegenhaltungen:
- DE-A1-102007 043 932
- FR-A1- 2 820 359
- US-A- 5 182 065

## Beschreibung

Die Erfindung betrifft ein Verfahren zur Herstellung eines im Wesentlichen schalenförmigen Kunststoffteils gemäß dem Oberbegriff von Anspruch 1 sowie eine Anlage zur Herstellung eines im Wesentlichen schalenförmigen Kunststoffteils gemäß dem Oberbegriff von Anspruch 12.

Schalenförmige Kunststoffteile der in Rede stehenden Art finden sich in zahlreichen technischen Anwendungsbereichen. Beispielhaft sei hier der Bereich der Innenraumausstattung von Kraftfahrzeugen genannt. Schalenförmige Kunststoffteile werden hier für Türinnenverkleidungen, Armaturenbretter, Dachhimmel, Laderaumböden o. dgl. benötigt. Angesichts der hohen Stückzahlen kommt der Automatisierbarkeit und der Effizienz der Fertigung ganz besondere Bedeutung zu.

Das bekannte Verfahren (EP 1 301 322 B1), von dem die Erfindung ausgeht, bedient sich eines Umformwerkzeugs mit Obermatrize und Untermatrize, in das ein Materialzuschnitt einer Fasermatte eingelegt wird. Zum Festhalten des Material Zuschnitts ist ein die Untermatrize umgebender Spannrahmen vorgesehen. Nach dem Einlegen wird der Materialzuschnitt mit einem reaktionsfähigen Matrixharz flächendeckend besprüht, so dass der Materialzuschnitt von dem Matrixharz getränkt wird. Schließlich wird zum Umformen des Materialzuschnitts das Umformwerkzeug geschlossen und in dem Schließzustand gehalten, bis das Matrixharz ausgehärtet ist.

Nach dem Aushärten wird das Kunststoffteil aus dem Umformwerkzeug entnommen und in einer gesonderten Arbeitsstation besäumt. Das Besäumen, also die Entfernung ungewünschter Randbereiche des ausgehärteten Kunststoffteils, wird hier mittels einer Schleifscheibe vorgenommen.

Alternativ zu dem obigen Besprühen des Materialzuschnitts mit einem Matrixharz ist es auch bekannt, das Matrixharz bei geschlossenem Umformwerkzeugs in die Kavität zwischen Obermatrize und Untermatrize zu injizieren. Dieses sogenannte Harzinjektionsverfahren (RTM-"Resin Transfer Moulding") ermöglicht eine vollautomatische Fertigung von Kunststoffteilen mit außerordentlich guter Oberflächengüte. Das Harzinjektionsverfahren wird ebenfalls in der EP 1 301 322 B1 erläutert.

Aus dem Dokument FR 2 820 359 A1 ist ein Verfahren zur Herstellung eines schalenförmigen Kunststoffteils bekannt, bei dem ein Materialzuschnitt einer Fasermatte in ein Umformwerkzeugs mit Ober- und Untermatrize eingelegt wird. Nach dem Schließen des Umformwerkzeuges wird der Rand des im Umformwerkzeug befindlichen Materialzuschnitts mit Hilfe eines Schneidmessers gesäumt. Nach dem Besäumen verbleibt das Schneidmesser in einer Stellung, in welcher das Schneidmesser einen Trennspalt zwischen der Ober- und Untermatrize abdeckt.

Ein Verfahren zum Herstellen eines Kunststoffteils in einem Umformwerkzeug ist weiterhin aus dem Dokument US 5,182,065 bekannt. Auch hierbei ist das Umformwerkzeug mit Ober- und Untermatrize gebildet. Das Dokument offenbart ein Verfahren gemäß dem Oberbegriff des Anspruchs 1 und eine Anlage gemäß dem Oberbegriff des Anspruchs 12.

Nachteilig bei dem bekannten Verfahren ist die Tatsache, dass das Besäumen des Kunststoffteils zeitaufwendig ist und stets eine zusätzliche Arbeitsstation erfordert.

Der Erfindung liegt das Problem zugrunde, das bekannte Verfahren derart auszugestalten und weiterzubilden, dass einerseits der Zeitaufwand für die Fertigung des Kunststoffteils reduziert und andererseits der Aufbau der Fertigungsanlage vereinfacht wird.

Das obige Problem wird bei einem Verfahren gemäß dem Oberbegriff von Anspruch 1 durch die Merkmale des kennzeichnenden Teils von Anspruch 1 gelöst. Weiterhin ist eine Anlage nach dem unabhängigen Anspruch 12 vorgeschlagen.

Wesentlich ist die grundsätzliche Überlegung, dass sich der Rand des umgeformten Materialzuschnitts mittels eines Besäumungswerkzeugs besäumt werden kann, während sich der Materialzuschnitt noch im Umformwerkzeug befindet. Damit ist es grundsätzlich möglich, das Besäumen des Materialzuschnitts in den Umformprozess zu integrieren. Gleichzeitig entfällt die Notwendigkeit, für das Besäumen eine separate Arbeitsstation vorzugehen.

Dem Besäumungswerkzeug ist eine Dichtanordnung zugeordnet, um den Trennspalt zwischen der Obermatrize und der Untermatrize im Hinblick auf den Austritt des injizierten Matrixharzes abzudichten. Dadurch, dass der Materialzuschnitt während der Injektion des Matrixharzes bereits besäumt ist, kommt einer solchen Dichtung besondere Bedeutung zu, da überstehendes Fasermaterial, also oben angesprochenes Ausschußmaterial, zur Aufnahme von aus dem Trennspalt austretenden Matrixharz nicht vorhanden ist.

Bei der bevorzugten Ausgestaltung gemäß Anspruch 2 ist es vorgesehen, in den Materialzuschnitt nach dessen Einlegen ein Matrixharz zu injizieren, womit sich eine gute Homogenität des herzustellenden Kunststoffteils erreichen lässt. Die Injektion von Matrixharz als solche geht auf das an sich bekannte Harzinjektionsverfahren (RTM-,,Resin Transfer Moulding") zurück. Es kann vorgesehen sein, dass der Injektionsdruck in einem Bereich zwischen etwa 5 bar und etwa 25 bar liegt.

Eine Ausgestaltung kann vorsehen, dass der Materialzuschnitt vor und/oder nach dessen Einlegen in das Umformwerkzeug zur Flexibilisierung des Materialzuschnitts und/oder zum Verflüssigen des Matrixharzes und/oder zum Aushärten des Matrixbarzes aufgeheizt wird. Vorzugweise kann vorgesehen sein, dass das Aufheizen des Materialzuschnitts durch ein entsprechendes Aufheizen des Umformwerkzeugs erreicht wird.

Sofern die Injektion des Matrixbarzes nach dem Besäumen vorgenommen wird (Anspruch 5) bleibt das Tränken von Ausschussmaterial mit Matrixharz aus, was unter Kosten- und Umweltaspekten vorteilhaft ist. Hierbei kann vorgesehen sein, dass die Schließkraft des Umformwerkzeugs nach dem Besäumen für die Injektion des Matrixharzes erhöht wird.

Bei der besonders bevorzugten Ausgestaltung gemäß Anspruch 7 handelt es sich bei dem Besäumungswerkzeug um ein Stanzwerkzeug mit einer Schneidkante, die mit einer entsprechenden Gegenschneidkante zusammenwirkt. Ein solches Besäumen durch Stanzen laisst sich in einem einzigen Arbeitstakt, insbesondere mit einer einzigen Schneidbewegung, durchführen, was die oben angesprochene Einsparung von Fertigungszeit mit sich bringt.

Um die Dichtanordnung während des Besäumen nicht zu beschädigen, ist es gemäß Anspruch 8 vorteilhafterweise vorgesehen, dass die Dichtanordnung expandierbar ausgestaltet ist.

Die weiter bevorzugten Ausgestaltungen gemäß den Ansprüchen 9 bis 11 betreffen die Einbringung mindestens eines Loches in den Materialzuschnitt bei geschlossenem Umformwerkzeug. In einer Variante von Anspruch 9 wird das Lochen im Wesentlichen gleichzeitig zu dem Besäumen vorgenommen, was wiederum im Hinblick auf eine geringe Fertigungszeit vorteilhaft ist.

Es kann vorgesehen sein, dass das Lochen durch Schneiden, insbesondere durch Stanzen mittels eines Lochwerkzeugs mit einem Lochstempel vorgenommen wird.

Vorzugsweise ist diese Anlage zur Durchführung des vorschlagsgemäßen Verfahrens geeignet. Insoweit gelten alle Ausführungen zu dem vorschlagsgemäßen Verfahren entsprechend.

Die vorschlagsgemäße Anlage ist wie oben mit einem Umformwerkzeug mit Obermatrize und Untermatrize ausgestattet, wobei ein Materialzuschnitt einer Fasermatte in das Umformwerkzeug einlegbar ist und wobei das Umformwerkzeug zum Umformen des Materialzuschnitts entlang einer Schließrichtung schließbar ist.

Wesentlich ist nach einer weiteren Lehre, dass dem Umformwerkzeug ein Bcsäumungswerkzeug zugeordnet ist, mit dem der Rand des noch im Umformwerkzeug befindlichen, umgeformten Materialzuschnitts besäumbar ist.

Wesentlich nach dieser weiteren Lehre ist, wie im Zusammenhang mit dem vorschlagsgemäßen Verfahren schon angedeutet, dass für das Besäumen auf die Realisierung einer separaten Arbeitsstation verzichtet werden kann.

Die besonders bevorzugten Ausgestaltungen gemäß den Ansprüchen 13 bis 16 betreffen eine vorteilhafte Grundstruktur der vorschlagsgemäßen Anlage. Wesentlich dabei ist die Tatsache, dass eine Matrize an einem Kopfteil angeordnet ist, wobei einerseits das Kopfteil gegenüber der Anlage im Übrigen entlang der Schließrichtung verstellbar ist und wobei andererseits die dem Kopfteil zugeordnete Matrize gegenüber dem Kopfteil verstellbar ausgestaltet ist. Durch die Anordnung des Besäumungswerkzeugs an dem Kopfteil gemäß Anspruch 31 lässt sich das Besäumen auf einfache Art und Weise in den Umformprozess integrieren.

Bei der Anlage kann vorgesehen sein, dass die Schließrichtung des Umformwerkzeugs im Wesentlichen vertikal verläuft.

Bei der Anlage kann vorgesehen sein, dass eine der beiden Matrizen, vorzugsweise die Obermatrize, an einem entlang der Schließrichtung verstellbaren Kopfteil angeordnet ist, vorzugsweise, dass die andere Matrize, vorzugsweise die Untermatrize, entlang der Schließrichtung unbeweglich ist.

Bei der Anlage kann weiter vorgesehen sein, dass die an dem Kopfteil angeordnete Matrize gegenüber dem Kopfteil in Schließrichtung ausfahrbar und entgegen der Schließrichtung einfahrbar ist, vorzugsweise, dass der an dem Kopfteil angeordneten Matrize ein insbesondere unidirektional in Schließrichtung wirkender Antrieb, insbesondere Federantrieb, zugeordnet ist.

Bei der Anlage kann sodann vorgesehen sein, dass das Umformwerkzeug bei ausgefah-, rener Matrize durch eine Verstellung des Kopfteils in Schließrichtung schließbar ist, vorzugsweise, dass eine weitere Verstellung des Kopfteils in Schließrichtung mit einer Verstellung der am Kopfteil angeordneten Matrize in deren eingefahrenen Stellung einhergeht.

Bei der Anlage kann weiter vorgesehen sein, dass zumindest eine der beiden Matrizen mindestens einen Injektionskanal aufweist, durch den hindurch nach dem Schließen des Umformwerkzeugs ein Matrixharz in die Kavität zwischen Obermatrize und Untermatrize und damit in den Materialzuschnitt injizierbar ist.

In Verbindung mit der Anlage kann vorgesehen sein, dass das Besäumungswerkzeug mindestens eine Schneidekante aufweist, die zum Besäumen vorzugsweise entlang der Schließrichtung des Umformwerkzeugs relativ zu einer Gegenschneidkante verstellbar ist. Es kann vorgesehen sein, dass die Gegenschneidkante an einer der beiden Matrizen, vorzugsweise an der Untermatrize, angeordnet ist.

Bei der Anlage kann vorgesehen sein, dass das Besäumungswerkzeug bezogen auf das Umformwerkzeug umlaufend ausgestaltet ist, so dass der Materialzuschnitt in einer einzigen Schneidbewegung umlaufend besäumbar ist.

Im Zusammenhang mit der Anlage kann vorgesehen sein, dass die Schneidkante des Besäumungswerkzeugs an dem Kopfteil angeordnet ist und dass die Verstellung des Kopfteils in Schließrichtung mit einem Schneideingriff zwischen Schneidkante und Gegenschneidkante des Besäumungswerkzeugs einhergeht.

In Verbindung mit der Anlage kann vorgesehen sein, dass die Dichtanordnung nach dem Besäumen im Bereich der Schneidkante des Besäumungswerkzeugs angeordnet ist.

Bei der Anlage kann vorgesehen sein, dass die Schneidkante des Besäumungswerkzeugs bezogen auf die Schlicßrichtung vorlaufend zu der Dichtanordnung angeordnet ist.

Bei der Anlage kann weiter vorgesehen sein, dass die Dichtanordnung des Besäumungswerkzeugs eine expandierbare Dichtung aufweist, die für die Abdichtung des Trennspaltes zu dem Trennspalt hin expandierbar ist und dann in dichtendem Eingriff mit dem Trennspalt steht und jedenfalls für das Besäumen einschrumpfbar ist und dann außer dichtendem Eingriff von der Obermatrize und / oder der Untermatrize steht.

Bei der Anlage kann vorgesehen sein, dass ein Lochwerkzeug vorgesehen ist, mit dem bei geschlossenem Umformwerkzeugs ein Loch in den Materialzuschnitt einbringbar ist. vorzugsweise, dass das Lochwerkzeug mindestens einen Lochstempel mit einer Schneidkante aufweist, die zum Lochen relativ zu einer Gegenschneidkante vorzugweise entlang der Schließrichtung des Urnformwerkzeugs verstellbar ist. Es kann vorgesehen sein, dass die Gegenschneidkante des Lochstempel an einer der beiden Matrizen, vorzugsweise an der Untermatrize, angeordnet ist.

Bei der Anlage kann weiter vorgesehen sein, dass der Lochstempel mit dem Besäumungswerkzeug und/oder mit dem Kopfteil verbunden ist.

Es kann bei der Anlage vorgesehen sein, dass der Lochstempel bei geschlossenem Umformwerkzeug durch eine Bohrung in der Obermatrize und / oder der Untermatrize hindurchführbar ist, dass dem Lochstempel eine Dichtanordnung zugeordnet ist und dass nach dem Lochen die Bohrung in der Obermatrize und / oder der Untermatrize mittels der Dichtanordnung im Hinblick auf den Austritt von Matrixharz abdichtbar ist. Es kann vorgesehen sein, dass die Dichtanordnung eine um die Bohrung in der Obermatrize verlaufende Dichtung und eine um die Bohrung in der Untermatrize verlautende Dichtung aufweist, dass beide Dichtungen abdichtend an dem Lochstempel anliegen und dass der Lochstempel eine der beiden Dichtungen in Lochungsrichtung an die entsprechende Matrize andrückt und dass ein zusätzlicher. Andrückstempel vorgesehen ist, der die andere der beiden Dichtungen in entgegengesetzter Richtung an die entsprechend andere Matrize andrückt.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Anlage zur Herstellung eines Kunststoffteils in einer Schnittansicht während des Einlegen des Materialzuschnitts,
- Fig. 2: die Anlage gemäß Fig. 1 während des Schließens des Umformwerkzeugs,
- Fig. 3: die Anlage gemäß Fig. 1 während des Besäumens des Materialzuschnitts,
- Fig. 4: die Anlage gemäß Fig. 1 während der Injektion des Matrixharzes,
- Fig. 5: die Anlage gemäß Fig. 1 während der Entnahme des ausgehärteten Kunststoffteils,
- Fig. 6: die Anlage gemäß Fig. 1 in einer Schnittdarstellung betreffend die Einbringung eines Loches in den Materialzuschnitt während des Einlegen des Materialzuschnitts,
- Fig. 7: die Anordnung gemäß Fig. 6 während des Schließens des Umformwerkzeugs,
- Fig. 8: die Anordnung gemäß Fig. 6 während des Lochens,
- Fig. 9: die Anordnung gemäß Fig. 6 wahrend der Injektion des Matrixharzes und
- Fig. 10: die Anordnung gemäß Fig. 6 während der Entnahme des ausgehärteten Kunststoffteils.

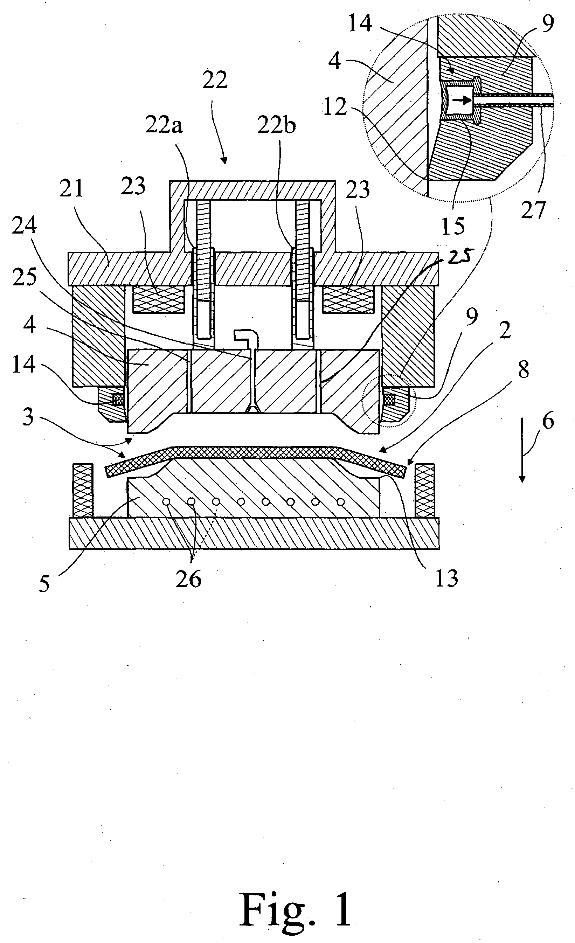

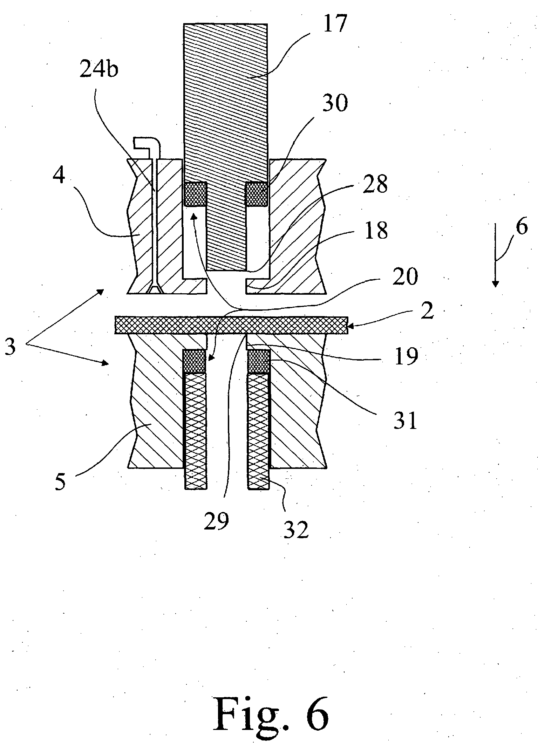

Die in den Fig. 1 bis 10 dargestellte Anlage dient der Durchführung des vorschlagsgemäßen Verfahrens zur Herstellung eines im Wesentlichen schalenförmigen Kunststoffteils 1. Dabei ist jeweils ein kompletter Herstellungszyklus in den Fig. 1 bis 5 bezogen auf die Gesamtanlage und in den Fig. 6 bis 10 bezogen auf den noch zu erläuternden Aspekt einer Materiallochung dargestellt.

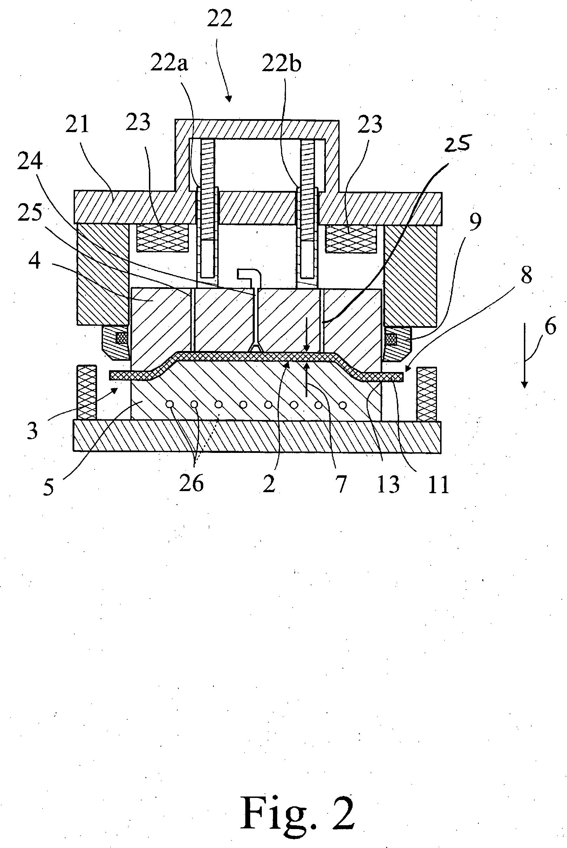

In einem ersten Verfahrensschritt wird ein Materialzuschnitt 2 einer Fasermatte in ein Umformwerkzeug 3 mit Obermatrize 4 und Untermatrize 5 eingelegt (Fig. 1). In einem zweiten Verfahrensschritt wird das Umformwerkzeug 3 zum Umformen des Materialzuschnitts 2 entlang einer Schließrichtung 6 geschlossen (Fig. 2). Die Obermatrize 4 und die Untermatrize 5 weisen zueinander korrespondierende Formgebungen auf, wobei bei geschlossenem Umformwerkzeug 3 eine Kavität 7 verbleibt, die mit dem Materialzuschnitt 2 ausgefüllt ist. Das Umformen des Materialzuschnitts 2 wird in üblicher Weise durch die Formgebung von Obermatrize 4 und Untermatrize 5 bestimmt.

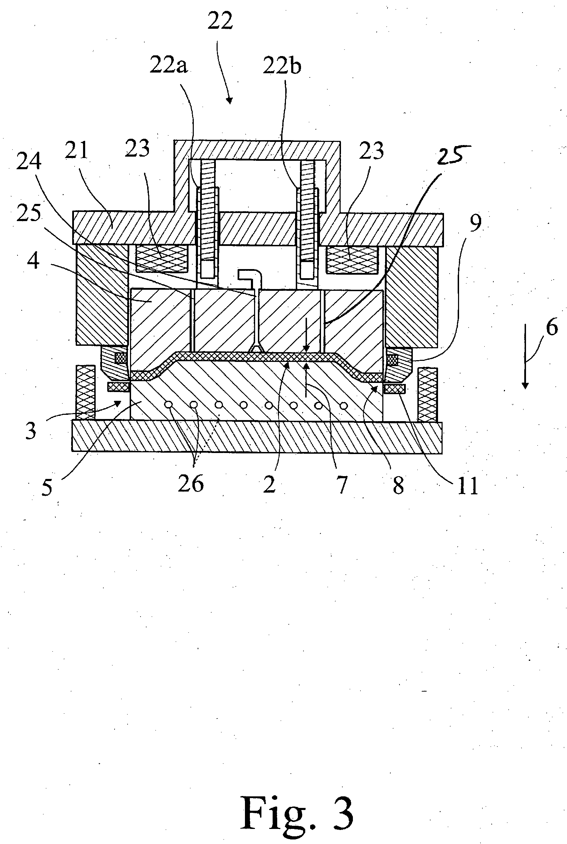

Wesentlich ist nun, dass der Rand 8 des noch im Umformwerkzeug 3 befindlichen, umgeformten Materialzuschnitts 2 mittels eines Besäumungswerkzeugs 9 besäumt wird (Fig. 3). Die hiermit verbundenen Vorteile im Hinblick auf die Effizienz bei der Herstellung wurden im allgemeinen Teil der Beschreibung erläutert.

Grundsätzlich ist es denkbar, dass dem obigen Umformschritt ein aus dem Stand der Technik bekanntes Besprühen des Materialzuschnitts 2 mit einem Harzgemisch vorausgeht, mit dem der Materialzuschnitt 2 entsprechend getränkt wird. Ein solches Harzgemisch wird im Folgenden stets als "Matrixharz" bezeichnet.

In besonders bevorzugter Ausgestaltung ist es allerdings vorgesehen, dass nach dem Schließen des Umformwerkzeugs 3 ein obiges Matrixharz in die Kavität 7 zwischen Obermatrix 4 und Untermatrix 5 und damit in den Materialzuschnitt 2 injiziert wird. Je nach Auslegung von Fasermatte und Kavität 7 können Injektionsdrücke in einem Bereich zwischen etwa 5 bar und etwa 25 bar vorteilhaft sein.

Für die Auslegung des Matrixharzes sind zahlreiche Auslegungen denkbar. Vorzugsweise enthält das Matrixharz mindestens ein Formaldehydharz, ein Reaktionsharz, ein Elastomer o. dgl.

Auch für die Auslegung der Fasermatte können unterschiedliche Auslegungen vorteilhaft sein. Bei Fasermatten mit Polyethylenfasern haben sich in Versuchen besonders gute Ergebnisse gezeigt.

Eine konstruktiv besonders leicht umsetzbare Variante für das Tränken des Materialzuschnitts 2 mit Matrixharz lässt sich dadurch erreichen, dass die Fasermatte als Prepreg-Fasermatte ausgestaltet ist. Solche Prepreg-Fasermatten sind im Ausgangszustand bereits mit einem Matrixharz imprägniert, das sich beim Aufheizen des Materialzuschnitts 2 verflüssigt. Alternativ oder zusätzlich kann es auch vorgesehen sein, dass die Fasermatte Kleberfäden aufweist, die entsprechend mit dem Matrixharz versehen sind. In beiden Fällen verflüssigt sich beim Aufheizen der Fasermatte ein in der Fasermatte vorhandenes Matrixharz, das die Fasermatte im Anschluss wie oben angesprochen tränkt.

In besonders bevorzugter Ausgestaltung handelt es sich bei dem Materialzuschnitt 2 beim Einlegen in das Umformwerkzeug 3 - noch - um eine Trockenfaser, die keine flüssigen Bestandteile aufweist. Dadurch gestaltet sich der Einlegevorgang besonders einfach.

Das Einlegen des Materialzuschnitts 2 in das Umformwerkzeug 3 kann manuell, oder aber robotergestützt durchgeführt werden. Der hier zum Einsatz kommende Roboter ist mit einem Greifer ausgestattet, bei dem es sich vorzugsweise um einen Sauggreifer handelt.

Je nach Auslegung des Materialzuschnitts 2 kann es vorgesehen sein, dass der Materialzuschnitt 2 vor und/oder nach dessen Einlegen in das Umformwerkzeug 3 aufgeheizt wird. Vor dem Einlegen in das Umformwerkzeug 3 kann das Aufheizen der Flexibilisierung des Materialzuschnitts 2 dienen. Alternativ oder zusätzlich kann ein Aufheizen aber auch nach dem Einlegen vorgesehen sein, um das Matrixharz zu verflüssigen, sofern es sich bei der Fasermatte beispielsweise um eine Prepreg-Fasermatte handelt. Alternativ oder zusätzlich ist es weiter möglich, dass ein Aufheizen dem Aushärten des Matrixharzes dient. In allen Fällen ist es vorzugsweise so, dass das Aufheizen des Materialzuschnitts 2 durch ein entsprechendes, noch zu erläuterndes Aufheizen des Umformwerkzeugs 3 erreicht wird.

Es darf darauf hingewiesen werden, dass der Materialzuschnitt 2 nicht aus einem homogenen Material ausgestaltet sein muss. Vielmehr ist es vorzugsweise vorgesehen, dass der Materialzuschnitt 2 insbesondere schon vor dessen Einlegen in das Umformwerkzeug 3 Einlegeteile, insbesondere Metalleinlagen, aufweist. Bei diesen Einlegeteilen kann es sich um Verstärkungen, Leitungen, Befestigungselemente o. dgl. handeln.

Fig. 3 zeigt, dass das Besäumen des Randes 8 des Materialzuschnitts 2 bei geschlossenem Umformwerkzeug 3 erfolgt. Bei geeigneter Ausgestaltung des Besäumungswerkzeugs 9 könnte es aber auch vorgesehen sein, dass das Besäumen bei zumindest teilweise geöffnetem Umformwerkzeug 3 erfolgt.

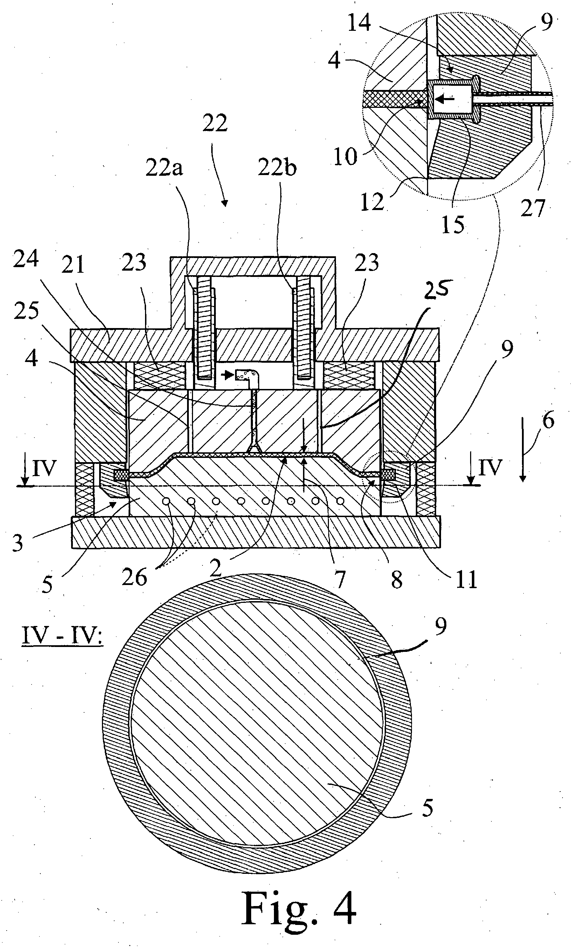

Bei der dargestellten und insoweit bevorzugten Verfahrensfolge ist die Injektion des Matrixharzes (Fig. 4) dem Besäumen (Fig. 3) nachgeschaltet. Üblicherweise ist es ja so, dass der Materialzuschnitt 2 nach dessen Einlegen in das Umformwerkzeug 3 entlang zumindest eines Teils des Trennspaltes 10 zwischen Obermatrize 4 und Untermatrize 5 übersteht. Solche überstehenden Randbereiche nehmen oft ungewünscht Matrixharz auf, was in vielen Fällen zu einer inhomogenen Verteilung von Matrixharz im Randbereich des Materialzuschnitts 2 führt. Die Injektion des Matrixharzes bei bereits besäumtem Materialzuschnitt 2 ist entsprechend vorteilhaft, da die obigen Probleme mit einem eventuell überstehenden Materialzuschnitt 2 nicht auftreten.

Für das vorschlagsgemäße Besäumen des Randes 8 des Materialzuschnitts 2 sind zahlreiche vorteilhafte Varianten denkbar. In besonders bevorzugter Ausgestaltung erfolgt das Besäumen durch Schneiden, insbesondere durch Stanzen, wie in Fig. 3 gezeigt. Dabei ist das Besäumungswerkzeug 9 mit mindestens einer Schneidkante 12 ausgestattet, die bei dem Besäumen hier und vorzugsweise entlang der Schließrichtung 6 des Umformwerkzeugs 3 relativ zu einer Gegenschneidkante 13 verstellt wird.

Für den Fall, dass dem Umformwerkzeug 3 ein Schieber zugeordnet ist, insbesondere um Hinterschnitte in den Materialzuschnitt 2 einzubringen, ist es vorteilhafterweise vorgesehen, dass das Besäumen im Zuge des Vorschiebens des Schiebers erfolgt. Vorzugsweise ist der Schieber mit einer obigen Schneidkante ausgestattet, die mit einer entsprechenden Gegenschneidkante zusammenwirkt. In besonders bevorzugter Ausgestaltung ist ein solcher, hier nicht dargestellter Schieber in einem Winkel zu der Schließrichtung 6 des Umformwerkzeugs 3, insbesondere senkrecht zu der Schließrichtung 6 des Umformwerkzeugs 3, vorschiebbar.

Ganz allgemein läuft im Zuge der Besäumung das Besäumungswerkzeug 9, insbesondere dessen Schneidkante 12, an der Außenseite der Obermatrize 4 und dann an der Außenseite der Untermatrize 5 entlang. Durch den Eingriff mit der Gegenschneidkante 13 kommt es dann zu der Besäumung der Materialzuschnitts 2 im Bereich der Trennlinie 10 zwischen Obermatrize 4 und Untermatrize 5.

Interessant bei dem in Fig. 3 dargestellten Besäumen ist die Tatsache, dass das Besäumungswerkzeug 9 bezogen auf das Umformwerkzeugs 3 umlaufend, hier und vorzugsweise ringförmig, ausgestaltet ist, so dass der Materialzuschnitt 2 umlaufend besäumt wird. Das umlaufende Besäumen folgt dabei vorteilhafterweise in einem einzigen. Arbeitsschritt, nämlich in einer einzigen Schneidbewegung des Besäumungswerkzeugs 9 in Schließrichtung 6, in Fig. 3 nach unten.

Im Hinblick auf die dem Besäumen nachgeschaltete Injektion von Matrixharz ist es gemäß der Erfindung vorgesehen, dass eine dem Besäumungswerkzeug 9 zugeordnete Dichtanordnung 14 vorgesehen ist, wobei nach dem Besäumen mittels der Dichtanordnung 14 der Trennspalt 10 zwischen der Obermatrize 4 und der Untermatrize 5 im Hinblick auf den Austritt des injizierten Matrixharzes abgedichtet wird. Die Abdichtung mittels der Dichtanordnung 14 ist in Fig. 4 dargestellt. Bei geeigneter Auslegung der Dichtanordnung 14 lässt sich einerseits ein Austreten des injizierten Matrix-harzes vermeiden und andererseits eine besonders homogene Verteilung des Matrixharzes auch in den Randbereichen des Materialzuschnitts 2 erreichen.

Eine Zusammenschau der Fig. 1 und 4 zeigt, dass die Dichtanordnung 14 eine expandierbare Dichtung 15 aufweist, die für die Abdichtung des Trennspaltes 10 zu dem Trennspalt 10 hin expandiert wird und dann in dichtendem Eingriff mit dem Trennspalt 10 steht (Fig. 4). Jedenfalls für das Besäumen wird die Dichtanordnung 14 vorzugsweise eingeschrumpft, so dass die Dichtung 15 dann außer dichtendem Eingriff, vorzugsweise vollständig außer Eingriff, von dem Trennspalt 10 steht. Mit dem Eingriff der Dichtung 15 mit dem Trennspalt 10 ist hier natürlich gemeint, dass die Dichtung 15 den Trennspalt 10 geringfügig überlappt, wie der Detaildarstellung in Fig. 4 zu entnehmen ist.

Das Einschrumpfen der expandierbaren Dichtung 15 für das Besäumen hat den Vorteil, dass die Dichtung 15 während des Besäumens außer Eingriff von der Obermatrize 4 und/oder der Untermatrize 5 steht. Hiermit kann ein eventueller Verschleiß der expandierbaren Dichtung 15 während des Besäumens weitgehend reduziert werden.

Bei der Ausstattung eines oben angesprochenen Schiebers mit einer Schneidkante ist es weiter vorzugsweise vorgesehen, dass auch der Schieber mit einer obigen Dichtanordnung ausgestattet ist, die den resultierenden Trennspalt im Hinblick auf den Austritt des injizierten Matrix-Harzes abdichtet. Vorzugsweise weist die Dichtanordnung des Schiebers eine obige, expandierbare Dichtung auf.

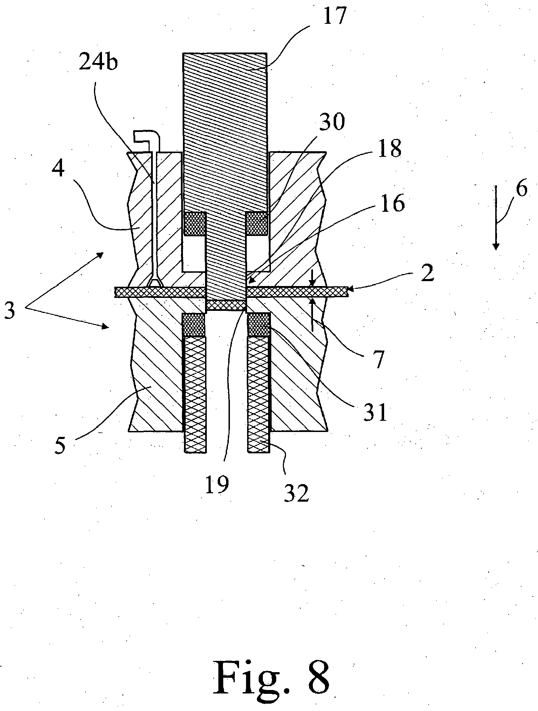

Je nach Anwendungsfall kann es wünschenswert sein, dass in den Materialzuschnitt 2 mindestens ein Loch 16 eingebracht wird. Der Begriff "Loch" ist hier weit zu verstehen und umfasst sowohl kreisrunde Ausnehmungen als auch beliebige Lochkonturen. Die Einbringung eines Loches 16 ist für den in den Fig. 1 bis 5 dargestellten Verfahrenszyklus in der Folge der Fig. 6 bis 10 dargestellt. Bei dem dargestellten und insoweit bevorzugten Ausführungsbeispiel wird das Lochen (Fig. 8) im Wesentlichen gleichzeitig zu dem Besäumen (Fig. 3) vorgenommen.

Für die Realisierung des Lochens sind verschiedene vorteilhafte Varianten denkbar. Hier und vorzugsweise wird das Lochen durch Schneiden, insbesondere durch Stanzen mittels eines Lochstempels 17, vorgenommen.

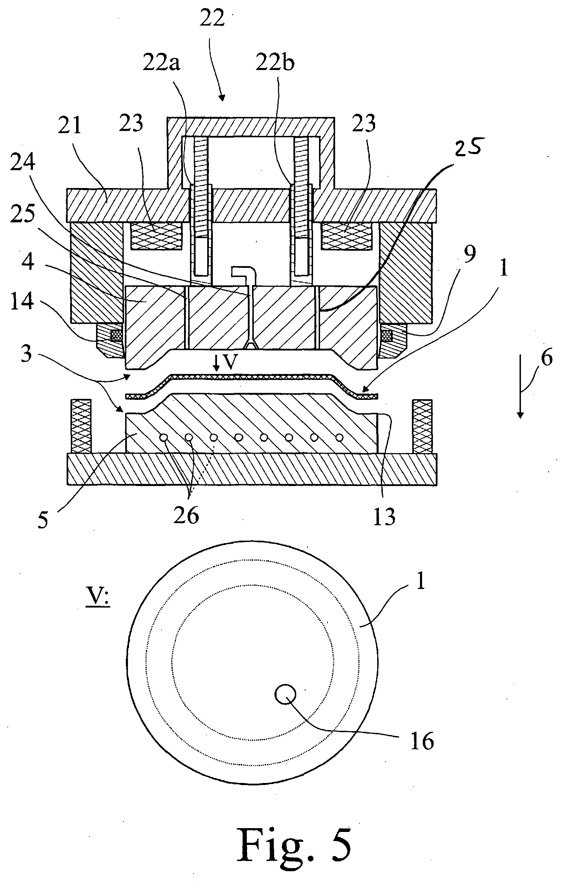

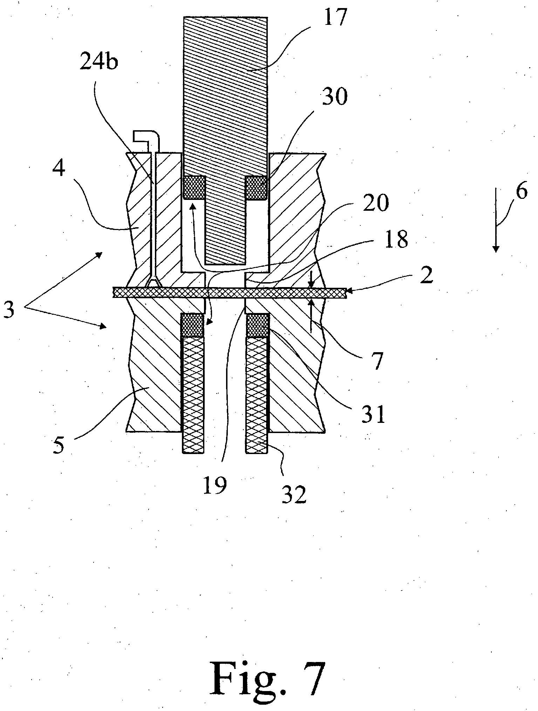

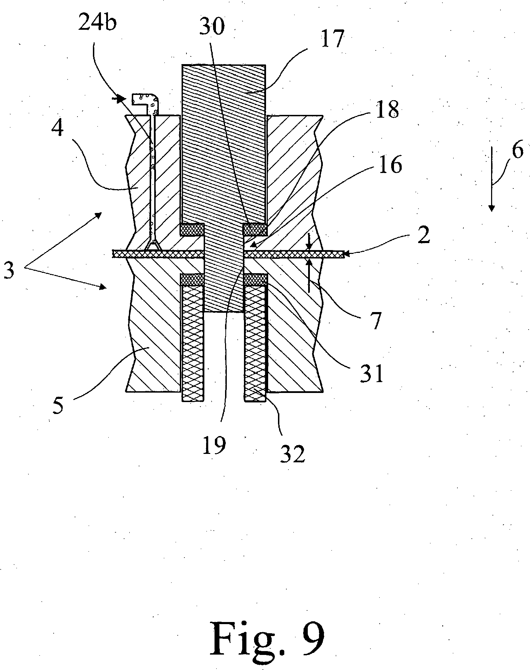

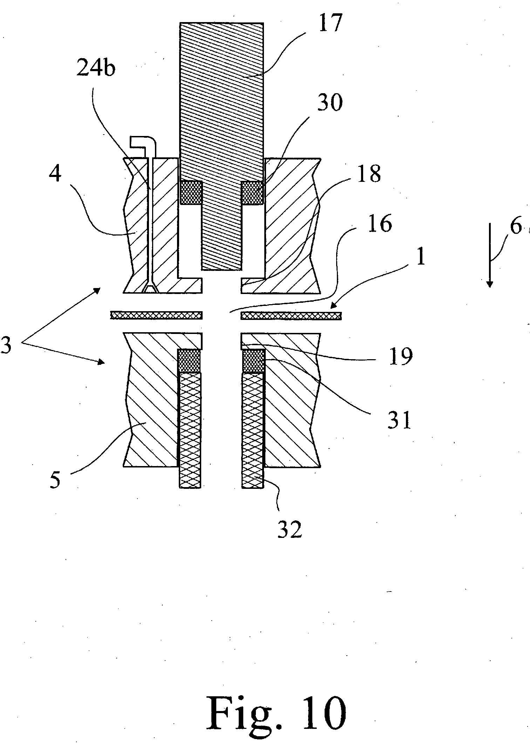

Nach dem Einlegen (Fig. 1, 6) folgt das Schließen des Umformwerkzeugs 3 (Fig. 2, 7) und das Besäumen und Lochen (Fig. 3, 8) sowie die Injektion des Matrixbarzes (Fig. 4,9). Schließlich wird das fertige Kunststoffteil 1 aus dem geöffneten Umformwerkzeug 3 entnommen (Fig. 5, 10).

Eine Zusammenschau der Fig. 6 bis 10 zeigt, dass der Lochstempel 17 bei geschlossenem Umformwerkzeug (Fig. 7) durch eine Bohrung 18 der Obermatrize 4 und hier und vorzugsweise durch eine weitere Bohrung 19 in der Untermatrize 5 hindurchgeführt wird. Diese Art der Führung des Lochstempels 17 lässt sich konstruktiv besonders einfach umsetzen.

Die Bohrungen 18, 19 erfordern allerdings zusätzliche Dichtmaßnahmen, um den Austritt von Matrixharz zu vermeiden. Vorschlagsgemäß ist dem Lochstempel 17 daher eine Dichtanordnung 20 zugeordnet, wobei nach dem Einbringen des Loches 16 mittels der Dichtanordnung 20 die Bohrung 18 in der Obermatrize 4 und hier auch die Bohrung 19 in der Untermatrize 5 im Hinblick auf den Austritt des injizierten Matrixharzes abgedichtet wird. Die Ausgestaltung der Dichtanordnung 20 wird weiter unten im Detail erläutert.

Nach einer weiteren Lehre, der eigenständige Bedeutung zukommt, wird die dargestellte Anlage zur Herstellung eines im Wesentlichen schalenförmigen Kunststoffteils 1 als solche beansprucht. Die dargestellte Anlage dient, wie oben angedeutet, der Durchführung des vorschlagsgemäßen Verfahrens.

Wesentlich bei der vorschlagsgemäßen Anlage ist die Tatsache, dass dem Umformwerkzeug 3 ein oben beschriebenes Besäumungswerkzeug 9 zugeordnet ist, mit dem der Rand 8 des noch im Umformwerkzeug 3 befindlichen, umgeformten Materialzuschnitts 2 besäumbar ist.

Besonders interessant ist der strukturelle Aufbau der vorschlagsgemäßen Anlage, bei der die Schließrichtung 6 des Umformwerkzeugs 3 im Wesentlichen vertikal verläuft. Eine der beiden Matrizen 4, 5, hier die Obennatrize 4, ist an einem entlang der Schließrichtung 6 verstellbaren Kopfteil 21 angeordnet, wobei weiter vorzugsweise die andere Matrize 5, hier die Untermatrize 5, entlang der Schließrichtung unbeweglich ausgestaltet ist. Das Kopfteil 21 ist nach Art einer Kopfplatte ausgestaltet, in der die Obennatrize 4 längsverschieblich geführt ist. Diese am Kopfteil 21 angeordnete Matrize 4 ist entsprechend gegenüber dem Kopfteil 21 in Schließrichtung ausfahrbar (Fig. 1, 2, 5) und entgegen der Schließrichtung einfahrbar (Fig. 3, 4). Dabei ist der an dem Kopfteil 21 angeordneten Matrize 4 ein hier und vorzugsweise unidirektional in Schließrichtung 6 wirkender, vorzugsweise pneumatischer Antrieb 22 zugeordnet. Bei dem Antrieb 22 kann es sich grundsätzlich um einen insbesondere pneumatisch wirkenden Federantrieb handeln. Bei dem dargestellten Ausführungsbeispiel ist der Antrieb 22 mit zwei Pneumatikzylindern 22a, 22b ausgestattet, die je nach Beaufschlagung mit Druckluft entsprechend einfedern können.

Der Übergang von Fig. 1 auf Fig. 2 zeigt, dass das Umformwerkzeug 3 bei ausgefahrener Obermatrize 4 durch eine Verstellung des Kopfteils 21 in Schließrichtung 6 schließbar ist. Eine weitere Verstellung des Kopfteils 21 in Schließrichtung geht dann mit einer Verstellung der am Kopfteil 21 angeordneten Obermatrize 4 entgegen der Vorspannung des Federantriebs 22, in deren eingefahrenen Stellung einher. Dies zeigt der Übergang von Fig. 2 auf Fig. 3 bis hin zu Fig. 4. In der vollständig eingefahrenen Stellung liegt die Obermatrize 4 an einer Anschlaganordnung 23 an, so dass die Federwirkung des Federantriebs 22 komplett aufgehoben ist. Dadurch lässt sich die Bewegung des Kopfteils 21 ungefedert auf die Obermatrize 4 übertragen.

Für die Verstellung des Kopfteils 21 steht vorzugsweise ein hydraulischer Pressenantrieb zur Verfügung, so dass bei der in Fig. 4 dargestellten Situation ohne Weiteres eine erhöhte Schließkraft erzeugbar ist. Dies ist in Fig. 4 dadurch dargestellt, dass die Kavität 7 verglichen mit dem in Fig. 2 dargestellten Zustand aufgrund der erhöhten Schließkraft schmaler geworden ist.

Für das oben beschriebene Harzinjektionsverfahren ist in zumindest einer der beiden Matrizen 4, 5, hier und vorzugsweise nur in der Obermatrize 4, mindestens ein Injektionskanal 24 vorgesehen, durch den hindurch nach dem Schließen des Umformwerkzeugs 3 Matrixharz in die Kavität 7 zwischen Obermatrize 4 und Untermatrize 5 und damit in den Materialzuschnitt 2 injizierbar ist. Da das herzustellende Kunststoffteil 1 hier und vorzugsweise rotationssymmetrisch ausgestaltet ist, ist ein zentraler Injektionskanal 24 vorgesehen, der sich durch die Obermatrize 4 hindurch erstreckt. Dem Injektionskanal 24 sind Entlüftungskanäle 25 zugeordnet, die in der Zeichnung links und rechts neben dem Injektionskanal 24 angeordnet sind. Je nach Formgebung des herzustellenden Kunststoffteils 1 kann auch eine ganz andere Anordnung von Injektionskanälen 24 und Entlüftungskanälen 25 vorgesehen sein.

Für das oben erläuterte Aufheizen des Materialzuschnitts 2 ist vorzugsweise eine Heizung 26 vorgesehen, die bei dem dargestellten und insoweit bevorzugten Ausführungsbeispiel durch eine Reihe von Heizpatronen in der Untermatrix 5 gebildet ist. Auch die Anwendung von Heizspiralen oder einer Wasserheizung ist hier denkbar.

Das Besäumungswerkzeug 9 ist wie oben angesprochen mit einer Schneidkante 12 ausgestattet, die zum Besäumen vorzugsweise entlang der Schließrichtung 6 des Umformwerkzeugs 3 relativ zu einer Gegenschneidkante 13 verstellbar ist. Hier und vorzugsweise ist die Gegenschneidkante 13 an einer der beiden Matrizen 4, 5, hier an der Untermatrize 5, angeordnet. Im, Einzelnen wird die Gegenschneidkante 13 schlicht durch die Außenkante der Untermatrize 5 gebildet.

Das Besäumungswerkzeug 9 ist, wie ebenfalls oben angesprochen, bezogen auf das Umformwerkzeug 3 umlaufend ausgestaltet, so dass der Materialzuschnitt 2 umlaufend besäumbar ist. Im Einzelnen ist das Besäumungswerkzeug 9, insbesondere die Schneidkante 12 des Besäumungswerkzeugs 9, im Wesentlichen ringförmig ausgebildet, wie die Schnittansicht in Fig. 3 zeigt.

Interessant ist die Tatsache, dass die Schneidkante 12 des Besäumungswerkzeugs 9 an dem Kopfteil 21 angeordnet ist und damit mit dem Kopfteil 21 verstellbar ist. Die Verstellung des Kopfteils 21 in Schließrichtung geht mit einem Schneideingriff zwischen Schneidkante 12 und Gegenschneidkante 13 des Besäumungswerkzeugs 9 einher, wie sich dem Übergang von Fig. 2 auf Fig. 3 entnehmen lässt. Während des Besäumens liegt die Obermatrize 4 über den Materialzuschnitt 2 auf der Unternatrize 5 auf, so dass der Federantrieb 22 entsprechend einfedert.

Eine besonders kompakte Anordnung ergibt sich dadurch, dass die oben angesprochene Dichtanordnung 14 vorzugsweise dem Besäumungswerkzeug 9 zugeordnet ist, wodurch nach dem Besäumen mittels der Dichtanordnung 14 der Trennspalt 10 zwischen der Obermatrize 4 und der Untermatrize 5 im Hinblick auf den Austritt des injizierten Matrixharzes abgedichtet wird. Bei der obigen, umlaufenden Ausgestaltung des Besäumungswerkzeugs 9 ist die Dichtanordnung 14 vorzugsweise an der Innenseite des Besäumungswerkzeugs 9, also dem Umformwerkzeug 3 zugewandt, angeordnet.

Im Hinblick auf einen effektiven Verfahrensablauf ist es besonders vorteilhaft, dass im dargestellten Ausführungsbeispiel die Schneidkante 12 des Besäumungswerkzeugs 9 bezogen auf die Schließrichtung 6 vorlaufend zu der Dichtanordnung 14 angeordnet ist. Damit lässt sich das Kopfteil 21 nach dem Besäumen in unveränderter Richtung von der in Fig. 3 dargestellten Position in die in Fig. 4 dargestellte Position bewegen. Eine Bewegungsumkehr des Kopfteils 21 ist für den gesamten Verfahrensablauf bis zur Entnahme des fertigen Kunststoffteils 1 nicht erforderlich.

Wie oben erläutert, weist die Dichtanordnung 14 eine expandierbare Dichtung 15 auf. Die Detailansicht in Fig. 4 zeigt den expandierten Zustand, die Detailansicht in Fig. 1 zeigt den eingeschrumpften Zustand. Die Dichtung wird über eine Zuleitung 27 mit Überdruck (Fig. 4) oder mit Unterdruck (Fig. 1) beaufschlagt, was zur Expansion bzw. Einschrumpfung der Dichtung 15 führt. Hier und vorzugsweise ist die Dichtung 15 in eine insbesondere umlaufende Nut im Besäumungswerkzeug 9 eingelegt. Die Dichtung 15 ist hier im Wesentlichen schlauchartig ausgestaltet, was die Expandierbarkeit der Dichtung 15 auf einfache Weise ermöglicht.

Bei der oben angesprochenen Ausstattung eines Schiebers mit einer Dichtanordnung ist es ebenfalls vorzugsweise vorgesehen, dass die Dichtung der Dichtanordnung wie oben erläutert schlauchartig ausgestaltet ist, um die Expandierbarkeit der Dichtung auf einfache Weise zu ermöglichen.

Interessant ist auch die Detailkonstruktion des weiter oben schon angesprochenen Lochwerkzeugs, mit dem bei geschlossenem Umformwerkzeug 3 ein Loch in den Materialzuschnitt 2 einbringbar ist (Fig. 8).

Das Lochwerkzeug ist mit einem obigen Lochstempel 17 mit einer Schneidkante 28 ausgestattet, die zum Lochen relativ zu einer Gegenschneidkante 29 hier und vorzugsweise entlang der Schließrichtung 6 des Umformwerkzeugs 3 verstellbar ist. Dies lässt sich den Übergang von Fig. 7 auf Fig. 8 entnehmen.

Die Gegenschneidkante 29 des Lochwerkzeugs ist hier und vorzugsweise an einer der beiden Matrizen 4, 5, hier an der Untermatrize 5, angeordnet, was zu einer besonders einfachen konstruktiven Ausgestaltung führt.

Besonders vorteilhaft bei der dargestellten Anordnung des Lochstempels 17 ist die Tatsache, dass der Lochstempel 17 mit dem Besäumungswerkzeug 9 und damit auch mit dem Kopfteil 21 verbunden ist (nicht dargestellt). Eine Verstellung des Kopfteils 21 bewirkt also nicht nur eine Verstellung des Besäumungswerkzeugs 9, sondern auch eine Verstellung des Lochstempels 17.

Konstruktiv einfach gelöst ist auch die Abdichtung des Lochstempels 17 gegenüber der Bohrung 18 in der Obermatrize 4 und der Bohrung 19 in der Untermatrize 5. Hierfür ist die Dichtanordnung 20 vorgesehen, durch die die Bohrungen 18, 19 im Hinblick auf den Austritt des injizierten Matrixharzes abdichtbar sind.

Im Einzelnen weist die Dichtanordnung 20 eine um die Bohrung 18 in der Obermatrize 4 verlaufende Dichtung 30 und eine um die Bohrung 19 in der Untermatrize 5 verlaufende Dichtung 31 auf, wobei beide Dichtungen 30, 31 jeweils abdichtend an dem Lochstempel 17 anliegen. Bei beiden Dichtungen 30, 31 handelt es sich hier und vorzugsweise um Ringdichtungen o. dgl.. Die Dichtungen 30, 31 können grundsätzlich auch als in obiger Weise expandierbare, insbesondere schlauchartige Dichtungen ausgelegt werden.

Die der Bohrung 18 der Obermatrize 4 zugeordnete Dichtung 30 wird während der Injektion des Matrixbarzes (Fig. 9) durch den Lochstempel 17 in Lochungsrichtung an die Obermatrize 4 angedrückt. Die Abdichtung der unteren Bohrung 19 erfolgt dadurch, dass die Dichtung 31 mittels eines zusätzlichen Andrückstempels 32 in entgegengesetzter Richtung an die entsprechend andere Matrize 5, nämlich an die Untermatrize 5, angedrückt wird. Der Andrückstempel 32 ist vorzugsweise mit einem einfachen pneumatischen Antrieb gekoppelt. Es darf darauf hingewiesen werden, dass hier beliebige andere Antriebe Anwendung finden können.

## Patentansprüche

1. Verfahren zur Herstellung eines im Wesentlichen schalenförmigen Kunststoffteils (1), wobei ein Materialzuschnitt (2) einer Fasermatte in ein Umformwerkzeug (3) mit Obermatrize (4) und Untermatrize (5) eingelegt wird, das Umformwerkzeug (3) anschließend zum Umformen des Materialzuschnitts (2) entlang einer Schließrichtung (6) geschlossen wird, und der Rand (8) des noch im Umformwerkzeug (3) befindlichen, umgeformten Materialzuschnitts (2) mittels eines Besäumungswerkzeugs (9) besäumt wird, wobei an dem Besäumungswerkzeug (9) eine Dichtanordnung (14) vorgesehen ist, **dadurch gekennzeichnet, dass** nach dem Besäumen mittels der Dichtanordnung (14) der Trennspalt (10) zwischen der Obermatrize (4) und der Untermatrize (5) im Hinblick auf den Austritt von Matrixharz abgedichtet wird.

2. Verfahren nach Anspruch 1, **dadurch gekennzeichnet, dass** nach dem Schließen des Umformwerkzeugs (3) ein Matrixharz in die Kavität (7) zwischen Obermatrize (4) und Untermatrize (5) und damit in den Materialzuschnitt (2) injiziert wird.

3. Verfahren nach Anspruch 1 oder 2, **dadurch gekennzeichnet, dass** der Materialzuschnitt (2) vor und/oder nach dessen Einlegen in das Umformwerkzeug (3) zur Flexibilisierung des Materialzuschnitts (2) und/oder zum Verflüssigen des Matrixbarzes und/oder zum Aushärten des Matrixbarzes aufgeheizt wird.

4. Verfahren nach einem der vorhergehenden Ansprüche, **dadurch gekennzeichnet, dass** das Besäumen bei geschlossenem Umformwerkzeug (3) erfolgt.

5. Verfahren nach Anspruch 2 und ggf. nach Anspruch 3 oder 4, **dadurch gekennzeichnet, dass** die Injektion des Matrixbarzes nach dem Besäumen vorgenommen wird.

6. Verfahren nach einem der vorhergehenden Ansprüche, **dadurch gekennzeichnet, dass** das Besäumen durch Schneiden, insbesondere durch Stanzen, erfolgt.

7. Verfahren nach einem der vorhergehenden Ansprüche, **dadurch gekennzeichnet, dass** das Besäumungswerkzeug (9) mindestens eine Schneidkante (12) aufweist, die bei dem Besäumen vorzugsweise entlang der Schließrichtung (6) des Umformwerkzeugs (3) relativ zu einer Gegenschneidkante (13) verstellt wird.

8. Verfahren nach einem der vorhergehenden Ansprüche, **dadurch gekennzeichnet, dass** die Dichtanordnung (14) eine expandierbare Dichtung (15) aufweist, die für die Abdichtung des Trennspaltes (10) zu dem Trennspalt (10) hin expandiert wird und dann in dichtendem Eingriff mit dem Trennspalt (10) steht und jedenfalls für das Besäumen cingeschrurnpft wird und dann außer dichtendem Eingriff von der Obermatrize (4) und/oder der Untermatrize (5) steht.

9. Verfahren nach einem der vorhergehenden Ansprüche, **dadurch gekennzeichnet, dass** mindestens ein Loch (16) bei geschlossenem Umformwerkzeug (3) in den Materialzuschnitt (2) eingebracht wird.

10. Verfahren nach Anspruch 9, **dadurch gekennzeichnet, dass** das Lochen durch Schneiden vorgenommen wird.

11. Verfahren nach Anspruch 9 oder 10, **dadurch gekennzeichnet, dass** der LochStempel (17) bei geschlossenem Umformwerkzeug (3) durch eine Bohrung (18, 19) in der Obermatrize (4) und/oder der Untermatrize (5) hindurchgeführt wird, dass dem Lochstempel (17) eine Dichtanordnung (20) zugeordnet ist und dass nach dem Einbringen des Loches (16) die Bohrung (18, 19) in der Obermatrize (4) und/oder der Untermatrize (5) mittels der Dichtanordnung (20) im Hinblick auf den Austritt von Matrix-harz abgedichtet wird.

12. Anlage zur Herstellung eines im Wesentlichen schalenförmigen Kunststoffteils (1), insbesondere zur Durchführung eines Verfahrens nach einem der vorhergehenden Ansprüche, wobei
- ein Umformwerkzeug (3) mit einer Obermatrize (4) und einer Untermatrize (5) vorgesehen ist, in das ein Materialzuschnitt (2) einer Fasermatte einlegbar ist,
- das Umformwerkzeug (3) zum Umformen des Materialzuschnitts (2) entlang einer Schließrichtung schließbar ist, und
- dem Umformwerkzeug (3) ein Besäumungswerkzeug (9) zugeordnet ist, mit dem der Rand (8) des noch im Umformwerkzeug (3) befindlichen, umgeformten Materialzuschnitts (2) besäumbar ist,
an dem Besäumungswerkzeug (9) eine Dichtanordnung (14) vorgesehen ist, **dadurch gekennzeichnet, dass** nach dem Besäumen mittels der Dichtanordnung (14) der Trennspalt (10) zwischen der Obermatrize (4) und der Untermatrize (5) im Hinblick auf den Austritt von Matrixharz abdichtbar ist.

13. Anlage nach Anspruch 12, **dadurch gekennzeichnet, dass** die Schließrichtung (6) des Umformwerkzeugs (3) im Wesentlichen vertikal verläuft.

14. Anlage nach Anspruch 12 oder 13, **dadurch gekennzeichnet, dass** eine der beiden Matrizen (4, 5), vorzugsweise die Obermatrize (4), an einem entlang der Schließrichtung verstellbaren Kopfteil (21) angeordnet ist.

15. Anlage nach Anspruch 14, **dadurch gekennzeichnet, dass** die an dem Kopfteil (21) angeordnete Matrize (4) gegenüber dem Kopfteil (21) in Schließrichtung (6) ausfahrbar und entgegen der Schließrichtung (6) cinfahrbar ist.

16. Anlage nach Anspruch 14 oder 15, **dadurch gekennzeichnet, dass** das Umformwerkzeug (3) bei ausgefahrener Matrize (4) durch eine Verstellung des Kopfteils (21) in Schließrichtung (6) schließbar ist

17. Anlage nach einem der Ansprüche 12 bis 16, **dadurch gekennzeichnet, dass** zumindert eine der beiden Matrizen (4, 5) mindestens einen Injektionskanal (24) aufweist, durch den hindurch nach dem Schließen des Umformwerkzeugs (3) ein Matrixharz in die Kavität (7) zwischen Obermatrize (4) und Untermatrize (5) und damit in den Materialzuschnitt (2) injizierbar ist.

18. Anlage nach einem der Ansprüche 12 bis 17, **dadurch gekennzeichnet, dass** das Besäumungswerkzeug (9) mindestens eine Schneidkante (12) aufweist.

19. Anlage nach einem der Ansprüche 12 bis 18, **dadurch gekennzeichnet, dass** das Besäumungswerkzeug (9) bezogen auf das Umformwerkzeug (3) umlaufend ausgestaltet ist, so dass der Materialzuschnitt (2) in einer einzigen Schneidbewegung umlaufend besäumbar ist.

20. Anlage nach Anspruch 13 und ggf. nach einem der Ansprüche 14 bis 19, **dadurch gekennzeichnet, dass** die Schneidkante (12) des Besäumungswerkzeugs (9) an dem Kopfteil (21) angeordnet ist und dass die Verstellung des Kopfteils (21) in Schließrichtung mit einem Schneideingriff zwischen Schneidkante (12) und Gegenschneidkante (13) des Besäumungswerkzeugs (9) einhergeht.

21. Anlage nach einem der Ansprüche 12 bis 19, **dadurch gekennzeichnet, dass** nach dem Besäumen die Dichtanordnung (14) im Bereich der Schneidkante (12) des Besäumungswerkzeugs (9) angeordnet ist.

22. Anlage nach Anspruch 21, **dadurch gekennzeichnet, dass** die Schneidkante (12) des Besäumungswerkzeugs (9) bezogen auf die Schließrichtung (6) vorlaufend zu der Dichtanordnung (14) angeordnet ist.

23. Anlage nach Anspruch 21 bis 22, **dadurch gekennzeichnet, dass** die Dichtanordnung (14) des Besäumungswerkzeugs (9) eine expandierbare Dichtung (15) aufweist, die für die Abdichtung des Trennspaltes (10) zu dem Trennspalt (10) hin expandierbar ist und dann in dichtendem Eingriff mit dem Trennspalt (10) steht und jedenfalls für das Besäumen einschrumpfbar ist und dann außer dichtendem Eingriff von der Obermatrize (4) und/oder der Untermatrize (5) steht.

24. Anlage nach einem der Ansprüche 12 bis 23, **dadurch gekennzeichnet, dass** ein Lochwerkzeug vorgesehen ist, mit dem bei geschlossenem Umformwerkzeug ein Loch in den Materialzuschnitt (2) einbringbar ist.

25. Anlage nach Anspruch 24, **dadurch gekennzeichnet, dass** der Lochstempel (17) mit dem Besäumungswerkzeug (9) und/oder mit dem Kopfteil (21) verbunden ist.

26. Anlage nach Anspruch 24 oder 25, **dadurch gekennzeichnet, dass** der Lochstempel (17) bei geschlossenem Umformwerkzeug (3) durch eine Bohrung (18, 19) in der Obermatrize (4) und/oder der Untermatrize (5) hindurchführbar ist, dass dem Lochstempel (17) eine Dichtanordnung (20) zugeordnet ist und dass nach dem Lochen die Bohrung (18, 19) in der Obermatrize (4) und/oder der Untermatrize (5) mittels der Dichtanordnung (20) im Hinblick auf den Austritt von Matrixharz abdichtbar ist.

## Claims

1. A method for producing a substantially shell-shaped plastic part (1), wherein a material blank (2) of a fiber mat is placed in a shaping tool (3) having an upper die (4) and a lower die (5), the shaping tool is subsequently closed along a closing direction (6) for shaping the material blank (2), and the edge (8) of the shaped material blank (2) still situated in the shaping tool (3) is trimmed by means of a trimming tool (9), wherein a sealing arrangement (14) is provided on the trimming tool (9), **characterized in that** after trimming, the parting gap (10) between the upper die (4) and the lower die (5) is sealed with respect to the leakage of matrix resin by means of the sealing arrangement (14).

2. The method according to claim 1, **characterized in that** after closing the shaping tool (3), a matrix resin is injected into the cavity (7) between the upper die (4) and the lower die (5) and thus into the material blank (2).

3. The method according to claim 1 or 2, **characterized in that** the material blank (2) is heated before and/or after placing it into the shaping tool (3) for flexibilization of the material blank (2) and/or for liquefying the matrix resin and/or for curing the matrix resin.

4. The method according to any one of the preceding claims, **characterized in that** the trimming takes place with the shaping tool (3) being closed.

5. The method according to claim 2 and optionally according to claim 3 or 4, **characterized in that** the injection of the matrix resin is carried out after trimming.

6. The method according to any one of the preceding claims, **characterized in that** trimming is carried out by cutting, in particular by die-cutting.

7. The method according to any one of the preceding claims, **characterized in that** the trimming tool (9) has at least one cutting edge (12) which, during trimming, is preferably displaced relative to a counter cutting edge (13) and along the closing direction (6) of the shaping tool (3).

8. The method according to any one of the preceding claims, **characterized in that** the sealing arrangement (14) has an expandable seal (15) which expands towards the parting gap (10) for sealing the parting gap (10) and is then in sealing engagement with the parting gap (10) and is shrunk at least for the trimming and is then out of the sealing engagement with the upper die (4) and/or the lower die (5).

9. The method according to any one of the preceding claims, **characterized in that** at least one hole (16) is put into the material blank (2) when the shaping tool (3) is closed.

10. The method according to claim 9, **characterized in that** putting in the hole is carried out by cutting.

11. The method according to claim 9 or 10, **characterized in that** with shaping tool (3) being closed, the punch (17) is fed through a bore (18, 19) in the upper die (4) and/or the lower die (5), that the punch (17) is assigned a sealing arrangement (20) and that after putting in the hole (16), the bore (18, 19) in the upper die (4) and/or the lower die (5) is sealed with respect to the leakage of matrix resin by means of the sealing arrangement (20).

12. An installation for producing a substantially shell-shaped plastic part (1), in particular for carrying out a method according to any one of the preceding claims, wherein
- a shaping tool (3) comprising an upper die (4) and a lower die (5) is provided, in which shaping tool a material blank (2) of a fiber mat can be placed,
- the shaping tool (3) can be closed along a closing direction for shaping the material blank, and
- the shaping tool (3) is assigned a trimming tool (9) by means of which the edge (8) of the material blank (2), which is still situated in the shaping tool (3), can be trimmed,
- a sealing arrangement (14) is provided on the trimming tool (9)
**characterized in that** after the trimming, the parting gap (10) between the upper die (4) and the lower die (5) can be sealed with respect to the leakage of matrix resin by means of the sealing arrangement (14).

13. The installation according to claim 12, **characterized in that** the closing direction (6) of the shaping tool (3) runs substantially vertically.

14. The installation according to claim 12 or 13, **characterized in that** one of the two dies (4, 5), preferably the upper die (4), is arranged at a top portion (21) that is displaceable along the closing direction.

15. The installation according to claim 14, **characterized in that** the die (4) arranged at the top portion (21) can be extended with respect to the top portion (21) in the closing direction (6) and can be retracted counter to the closing direction (6).

16. The installation according to claim 14 or 15, **characterized in that** with the die (4) being extended, the shaping tool (3) can be closed by displacing the top portion (21) in the closing direction (6).

17. The installation according to any of the claims 12 to 16, **characterized in that** at least one of the two dies (4, 5) has at least one injection channel (24) through which, after closing the shaping tool (3), a matrix resin can be injected into the cavity (7) between the upper die (4) and the lower die (5) and thus into the material blank (2).

18. The installation according to any one of claims 12 to 17, **characterized in that** the trimming tool (9) has at least one cutting edge (12).

19. The installation according to any one of claims 12 to 18, **characterized in that** the trimming tool (9) is configured to extend circumferentially with respect to the shaping tool (3) in such a manner that the material blank (2) can be trimmed circumferentially with a single cutting movement.

20. The installation according to claim 13 and optionally according to any one of claims 14 to 19, **characterized in that** the cutting edge (12) of the trimming tool (9) is arranged on the top portion (21) and that the displacement of the top portion (21) in the closing direction is accompanied by a cutting engagement between the cutting edge (12) and the counter cutting edge (13) of the trimming tool (9).

21. The installation according to any one of claims 12 to 19, **characterized in that** after trimming, the sealing arrangement (14) is arranged in the region of the cutting edge (12) of the trimming tool (9).

22. The installation according to claim 21, **characterized in that** the cutting edge (12) of the trimming tool (9) is arranged upstream of the sealing arrangement (14) with respect to the closing direction (6).

23. The installation according to claims 21 to 22, **characterized in that** the sealing arrangement (14) of the trimming tool (9) has an expandable seal (15) which can be expanded towards the parting gap (10) for sealing the parting gap (10) and is then in sealing engagement with the parting gap (10) and is shrinkable at least for the trimming and is then out of the sealing engagement with the upper die (4) and/or the lower die (5).

24. The installation according to any one of claims 12 to 23, **characterized in that** a punching tool is provided by means of which a hole can be put into the material blank (2) when the shaping tool is closed.

25. The installation according to claim 24, **characterized in that** the punch (17) is connected to the trimming tool (9) and/or to the top portion (21).

26. The installation according to claim 24 or 25, **characterized in that** with the shaping tool (3) being closed, the punch (17) can be fed through a bore (18, 19) in the upper die (4) and/or the lower die (5), that the punch (17) is assigned a sealing arrangement (20) and that after putting in the hole (16), the bore (18, 19) in the upper die (4) and/or the lower die (5) can be sealed with respect to the leakage of matrix resin by means of the sealing arrangement (20).

## Revendications

1. Procédé destiné fabriquer une pièce (1) en matière plastique sensiblement en forme de coque, lors duquel on insère un coupon (2) de matière d'une natte de fibres dans un outil de façonnage (3) avec une matrice supérieure (4) et une matrice inférieure (5), pour le façonnage du coupon (2) de matière, on ferme ensuite l'outil de façonnage (3) le long d'une direction de fermeture (6) et on déligne le bord (8) du coupon (2) de matière qui se trouve encore dans l'outil de façonnage (3) au moyen d'un outil de délignage (9), sur l'outil de délignage (9) étant prévu un dispositif d'étanchéité (14) et **caractérisé en ce qu'**après le délignage, l'étanchéité de l'interstice de séparation (10) entre la matrice supérieure (4) et la matrice inférieure (5) est assurée au moyen du dispositif d'étanchéité (14) en ce qui concerne la sortie de résine matricielle.

2. Procédé selon la revendication 1, **caractérisé en ce qu'**après la fermeture de l'outil de façonnage (3), on injecte une résine matricielle dans la cavité (7) entre la matrice supérieure (4) et la matrice inférieure (5) et ainsi dans le coupon (2) de matière.

3. Procédé selon la revendication 1 ou la revendication 2, **caractérisé en ce qu'**on chauffe le coupon (2) de matière avant et/ou après l'avoir inséré dans l'outil de façonnage (3) pour assouplir le coupon (2) de matière et/ou pour liquéfier la résine matricielle et/ou pour durcir la résine matricielle.

4. Procédé selon l'une quelconque des revendications précédentes, **caractérisé en ce que** le délignage s'effectue lorsque l'outil de façonnage (3) est fermé.

5. Procédé selon la revendication 2 et le cas échéant selon la revendication 3 ou la revendication 4, **caractérisé en ce qu'**il est procédé à l'injection de la résine matricielle après le délignage.

6. Procédé selon l'une quelconque des revendications précédentes, **caractérisé en ce que** le délignage s'effectue par découpe, notamment par estampage.

7. Procédé selon l'une quelconque des revendications précédentes, **caractérisé en ce que** l'outil de délignage (9) comporte au moins une arête de coupe (12) que l'on ajuste lors du délignage de préférence le long de la direction de fermeture (6) de l'outil de façonnage (3) par rapport à une arête (13) de contre-coupe.

8. Procédé selon l'une quelconque des revendications précédentes, **caractérisé en ce que** le dispositif d'étanchéité (14) comporte un joint (15) expansé qui se dilate en direction de l'interstice de séparation (10), pour assurer l'étanchéité de l'interstice de séparation (10) et qui ensuite se trouve en engagement d'étanchéité avec l'interstice de séparation (10) et qui se rétracte dans tous les cas pour le délignage et qui se trouve ensuite hors engagement d'étanchéité par rapport à la matrice supérieure (4) et/ou la matrice inférieure (5).

9. Procédé selon l'une quelconque des revendications précédentes, **caractérisé en ce qu'**on ménage l'au moins un trou (16) dans le coupon (2) de matière lorsque l'outil de façonnage (3) est fermé.

10. Procédé selon la revendication 9, **caractérisé en ce qu'**on procède à la perforation par découpe.

11. Procédé selon la revendication 9 ou la revendication 10, **caractérisé en ce que** lorsque l'outil de façonnage (3) est fermé, on fait passer le poinçon (17) à travers un perçage (18, 19) dans la matrice supérieure (4) et/ou la matrice inférieure (5), **en ce que** un dispositif d'étanchéité (20) est associé au poinçon (17) et **en ce qu'**après avoir ménagé le trou (16), on assure l'étanchéité du perçage (18, 19) dans la matrice supérieure (4) et/ou dans la matrice inférieure (5) au moyen du dispositif d'étanchéité (20) en ce qui concerne la sortie de résine matricielle.

12. Installation destinée à fabriquer une pièce (1) en matière plastique sensiblement en forme de coque, notamment pour réaliser un procédé selon l'une quelconque des revendications précédentes,
- un outil de façonnage (3) avec une matrice supérieure (4) et une matrice inférieure (5) dans lequel un coupon (2) de matière d'une natte en fibres est insérable étant prévu,
- l'outil de façonnage (3) pouvant se fermer pour façonner le coupon (2) de matière le long d'une direction de fermeture et
- à l'outil de façonnage (3) étant associé un outil de délignage (9), à l'aide duquel le bord (8) du coupon de matière (2) façonné, se trouvant encore dans l'outil de façonnage (3) peut être déligné
- sur l'outil de délignage (9) étant prévu un dispositif d'étanchéité (14), **caractérisée en ce qu'**après le délignage, l'étanchéité de l'interstice de séparation (10) entre la matrice supérieure (4) et la matrice inférieure (5) peut être assurée au moyen du dispositif d'étanchéité 14), en ce qui concerne la sortie de résine matricielle.

13. Installation selon la revendication 12, **caractérisée en ce que** la direction de fermeture (6) de l'outil de façonnage (3) s'écoule sensiblement à la verticale.

14. Installation selon la revendication 12 ou la revendication 13, **caractérisée en ce que** l'une des deux matrices (4, 5), de préférence la matrice supérieure (4) est placée sur une pièce de tête (21) ajustable le long de la direction de fermeture.

15. Installation selon la revendication 14, **caractérisée en ce que** la matrice (4) placée sur la pièce de tête (21) est susceptible d'être extraite dans la direction de fermeture (6) et introduite à l'encontre de la direction de fermeture (6) par rapport à la pièce de tête (21).

16. Installation selon la revendication 14 ou la revendication 15, **caractérisée en ce que** lorsque la matrice (14) est sortie, l'outil de façonnage (3) peut se fermer par un ajustage de la pièce de tête (21) dans la direction de fermeture (6).

17. Installation selon l'une quelconque des revendications 12 à 16, **caractérisée en ce qu'**au moins l'une des deux matrices (4, 5) comporte au moins un canal d'injection (24), à travers lequel, après la fermeture de l'outil de façonnage (3), une résine matricielle peut être injectée dans la cavité (7) entre la matrice supérieure (4) et la matrice inférieure (5) et ainsi dans le coupon (2) de matière.

18. Installation selon l'une quelconque des revendications 12 à 17, **caractérisée en ce que** l'outil de délignage (9) comporte au moins une arête de découpe (12).

19. Installation selon l'une quelconque des revendications 11 à 18, **caractérisée en ce qu'**en rapport à l'outil de façonnage (3), l'outil de délignage (9) est conçu en étant périphérique, de sorte que le coupon (2) de matière puisse être déligné sur sa périphérie en un seul mouvement de découpe.

20. Installation selon la revendication 13 et le cas échéant selon l'une quelconque des revendications 14 à 19, **caractérisée en ce que** l'arête de coupe (12) de l'outil de délignage (9) est placée sur la pièce de tête (21) et **en ce que** l'ajustage de la pièce de tête (21) dans la direction de fermeture s'accompagne d'un engagement en coupe entre l'arête de coupe (12) et l'arête de contre-coupe (13) de l'outil de délignage (9).

21. Installation selon l'une quelconque des revendications 12 à 19, **caractérisée en ce qu'**après le délignage, le dispositif d'étanchéité (14) est placé dans la zone de l'arête de coupe (12) de l'outil de délignage (9).

22. Installation selon la revendication 21, **caractérisée en ce que** l'arête de coupe (12) de l'outil de délignage (9) est placée en amont du dispositif d'étanchéité (14), en rapport de la direction de fermeture (6).

23. Installation selon la revendication 21 ou la revendication 22, **caractérisée en ce que** le dispositif d'étanchéité (14) de l'outil de délignage (9) comporte un joint (15) expansé, qui est dilatable vers l'interstice de séparation (10) pour assurer l'étanchéité de l'interstice de séparation (10) et qui se trouve ensuite en engagement d'étanchéité avec l'interstice de séparation (10) et dans tous les cas est rétractable pour le délignage et qui ensuite se trouve hors engagement d'étanchéité par rapport à la matrice supérieure (4) et/ou la matrice inférieure (5).

24. Installation selon l'une quelconque des revendications 12 à 23, **caractérisée en ce qu'**il est prévu un outil de perforation, avec lequel, lorsque l'outil de façonnage est fermé, un trou peut être ménagé dans le coupon (2) de matière.

25. Installation selon la revendication 24, **caractérisée en ce que** le poinçon (17) est relié avec l'outil de délignage (9) et/ou avec la pièce de tête (21).

26. Installation selon la revendication 24 ou la revendication 25, **caractérisée en ce que** lorsque l'outil de façonnage (3) est fermé, le poinçon (17) peut être introduit à travers un perçage (18, 19) dans la matrice supérieure (4) et/ou dans la matrice inférieure (5), **en ce qu'**au poinçon (17) est associé un dispositif d'étanchéité (20) et **en ce qu'**après la perforation, l'étanchéité du perçage (18, 19) dans la matrice supérieure (4) et/ou dans la matrice inférieure (5) est susceptible d'être assurée au moyen du dispositif d'étanchéité (20) en ce qui concerne la sortie de résine matricielle.
